# EUROPÄISCHE PATENTSCHRIFT

(11) **EP 2 253 872 B1**
(45) Veröffentlichungstag und Bekanntmachung des Hinweises auf die Patenterteilung: **31.12.2014**
(21) Anmeldenummer: 10005201.8
(22) Anmeldetag: 18.05.2010
(51) Int. Cl.: F16K 1/52, F16K 31/122

(54) **Ventilantrieb**
Valve gear
Mécanisme de distribution

(30) Priorität: 18.05.2009 DE 202009007123 U
(43) Veröffentlichungstag der Anmeldung: 24.11.2010
(73) Patentinhaber: Bürkert Werke GmbH, 74653 Ingelfingen (DE)
(72) Erfinder: Maksimovic, Predrag, 74906 Bad Rappenau (DE)
(74) Vertreter: Prinz & Partner mbB

(56) Entgegenhaltungen:
- WO-A2-2008/008740
- NL-A- 6 701 438
- US-A1- 2004 007 682
- US-A1- 2005 242 312

## Beschreibung

Die Erfindung betrifft einen Ventilantrieb zum Schalten eines Ventils in drei vordefinierte Ventilstellungen.

Durchflusssteuerventile mit drei vordefinierten Ventilstellungen sowie Antriebe zur Betätigung dieser sogenannten "3-Stellungsventile" sind bereits allgemein aus dem Stand der Technik bekannt.

3-Stellungsventile bilden bei vielen Anwendungen einen vorteilhaften Kompromiss zwischen preiswerten, aber wenig anpassungsfähigen 2-Stellungsventilen, die lediglich eine geschlossene und eine offene Ventilstellung aufweisen, und sehr anpassungsfähigen, aber recht teuren Proportionalventilen, die sich zwischen ihrer geschlossenen und ihrer offenen Ventilstellung stufenlos einstellen lassen.

Häufig ist zwar eine teilgeöffnete, dritte Ventilstellung erwünscht, eine ständige Einstellbarkeit der teilgeöffneten Ventilstellung jedoch nicht erforderlich. Beispielsweise hat es sich in der Lebensmittelindustrie beim Abfüllen von Flüssigkeiten, insbesondere von kohlensäurehaltigen Getränken als äußerst vorteilhaft erwiesen, zu Beginn und gegen Ende des Befüllvorgangs in eine gedrosselte, das heißt teilgeöffnete Ventilstellung des Durchflusssteuerventils zu schalten, um ein übermäßiges Aufschäumen der Flüssigkeit zu verhindern.

Weiter hat es sich als vorteilhaft erwiesen, wenn die teilgeöffnete Ventilstellung zwar vorab, beispielsweise in Abhängigkeit von der abzufüllenden Flüssigkeit, auf einen definierten Anteil des maximalen Durchflussquerschnitts in der Ventiloffenstellung einstellbar ist, im Ventilbetrieb dann jedoch stets dieser voreingestellte, gedrosselte Durchflussquerschnitt der teilgeöffneten Ventilstellung eingenommen wird.

Die WO 2008/008740 A2 offenbart einen gattungsgemäßen Ventilantrieb zum Schalten eines Ventils in drei vordefinierte Ventilstellungen. Ein Antriebskolben des Ventilantriebs ist dabei zwischen einer geschlossenen, ersten Ventilstellung und einer offenen, zweiten Ventilstellung verschieblich in einem Gehäuse geführt und kann ferner in eine teilgeöffnete, dritte Ventilstellung beaufschlagt sein. Die dritte Ventilstellung ist durch einen Anschlag definiert, der durch einen axial justierbaren Anschlagkolben gebildet wird.

Aufgabe der Erfindung ist die Schaffung eines besonders kompakten sowie konstruktiv möglichst einfachen und zuverlässigen Ventilantriebs zum Schalten eines 3-Stellungsventils.

Die Aufgabe wird erfindungsgemäß gelöst durch einen Ventilantrieb mit den Merkmalen des Anspruchs 1. Durch eine Unterteilung des Arbeitsraums in lediglich drei Kammern ergibt sich eine besonders unkomplizierte und kompakte Antriebskonstruktion. Trotz dieser einfachen und kompakten Bauweise sind die teilgeöffnete, dritte Ventilstellung und ein damit einhergehender Ventildurchfluss präzise definiert, indem ein Anschlag für den Durchflusssteuerkolben vorgesehen ist.

In einer Ausführungsform des Ventilantriebs ist der Durchflusssteuerkolben bei der Befüllung wenigstens einer Druckkammer, vorzugsweise beider Druckkammern mit einem Druckmedium in die dritte Ventilstellung beaufschlagt. Das Ventil nimmt diese dritte, teilgeöffnete Ventilstellung in der Regel nur kurzzeitig als Übergangsstellung zwischen der geschlossenen, ersten Ventilstellung und der offenen, zweiten Ventilstellung ein, so dass ein hoher Energieverbrauch durch die Druckbeaufschlagung von einer oder gar beiden Druckkammern, lediglich bei einer kurzzeitig eingenommenen Ventilstellung auftritt. Folglich lässt sich der Ventilantrieb in diesem Fall mit minimalem Energieaufwand ansteuern.

Vorzugsweise liegt der Justierkolben in der dritten Ventilstellung an einem Justierkolbenanschlag an. Somit ist der Justierkolben in der dritten, teilgeöffneten Ventilstellung in seiner Lage exakt fixiert, was eine Voraussetzung für die genaue Einstellung des Ventildurchflussquerschnitts in der dritten Ventilstellung ist.

Darüber hinaus liegt der Justierkolben in der dritten Ventilstellung bevorzugt am Durchflusssteuerkolben an und bildet den Anschlag für den Durchflusssteuerkolben. Durch diesen Anschlagkontakt zwischen den beiden Kolben lässt sich der Durchflusssteuerkolben exakt in seiner Lage fixieren, wodurch ein Ventildurchfluss in der dritten, teilgeöffneten Ventilstellung präzise festgelegt ist.

Um eine besonders kompakte und einfache Antriebsbauweise zu ermöglichen, kann der Justierkolbenanschlag außerhalb des Arbeitsraums ausgebildet sein. Der Justierkolben kann hier beispielsweise einen Fortsatz aufweisen, der aus dem zylindrischen Arbeitsraum ragt.

In einer bevorzugten Ausführungsform weist der Justierkolben eine Justiervorrichtung zum Einstellen eines Durchflussquerschnitts in der dritten Ventilstellung auf. Der Ventilantrieb bzw. das zugeordnete Ventil lässt sich dadurch besonders einfach an vorgegebene Randbedingungen anpassen.

Konkret kann die Justiervorrichtung hierbei eine Gewindestange, die fest mit einem aus dem Arbeitsraum ragenden Fortsatz des Justierkolbens verbunden ist, sowie eine unterschiedlich weit auf die Gewindestange aufdrehbare Mutter umfassen.

In einer weiteren Ausführungsform des Ventilantriebs ist wenigstens ein Federelement vorgesehen, welches den Durchflusssteuerkolben in die geschlossene, erste Ventilposition beaufschlagt. Insbesondere bei sogenannten NC-Ventilen (normally-closed) lässt sich hierdurch der Energieverbrauch des Ventilantriebs weiter reduzieren. Da sich diese Ventile in der Regel die längste Zeit in ihrer geschlossenen, ersten Ventilstellung befinden, ist es energetisch besonders vorteilhaft, wenn in dieser ersten Ventilstellung keine Energie zur Druckbeaufschlagung der Druckkammern benötigt wird. Des Weiteren ist es in Bezug auf einen möglichen Ausfall des Ventilantriebs üblicherweise erwünscht, dass das Ventil alleine aufgrund von Federkräften in die Schließstellung bewegt wird. In alternativen Ausführungsvarianten ist es aber natürlich auch möglich, dass das wenigstens eine Federelement den Durchflusssteuerkolben in die offene, zweite Ventilposition oder die teilgeöffnete, dritte Ventilstellung beaufschlagt.

Bevorzugt greift das wenigstens eine Federelement sowohl am Justierkolben als auch am Durchflusssteuerkolben an und beaufschlagt die beiden Kolben voneinander weg. Mit geeigneten Schraubendruckfedern lässt sich dadurch auf einfache Art und Weise eine Positionierung des Durchflusssteuerkolbens in einer gewünschten Ventilstellung, vorzugsweise der geschlossenen, ersten Ventilstellung realisieren.

Erfindungsgemäß ist der Durchflusssteuerkolben fest mit einer Kolbenstange und die Kolbenstange wiederum fest mit einem gegen einen Ventilsitz bewegbaren Ventilkörper verbunden. Dabei wirkt der Ventilkörper mit dem Ventilsitz zusammen, um einen Durchflussquerschnitt des 3-Stellungsventils festzulegen. Infolge der starren Kopplung zwischen dem Ventilkörper und dem Durchflusssteuerkolben ist der Durchflussquerschnitt des Ventils unmittelbar durch die axiale Position des Durchflusssteuerkolbens im Arbeitsraum festgelegt.

Ferner nimmt der Justierkolben die Kolbenstange auf und ist entlang der Kolbenstange verschiebbar. Somit bilden der Durchflusssteuerkolben mit seiner Kolbenstange und der Justierkolben mit einer entsprechenden Ausnehmung zur Aufnahme der Kolbenstange bei einer Kolbenbewegung jeweils gegenseitig eine axiale Führung füreinander, wodurch die Stabilität und Funktionssicherheit des Ventilantriebs verbessert wird. Insbesondere wird ein unerwünschtes Verkanten der Kolben im zylindrischen Arbeitsraum weitgehend ausgeschlossen.

Ein Druckmedium zur Befüllung der Druckkammern kann insbesondere gasförmig sein, sodass das Ventil pneumatisch betätigt ist.

Weitere zweckmäßige Ausgestaltungen der Erfindung und deren Vorteile ergeben sich aus den Unteransprüchen.

Die Erfindung wird nachfolgend anhand einer bevorzugten Ausführungsform beschrieben, die in den beigefügten Zeichnungen dargestellt ist. In diesen zeigt:
- Figur 1 einen Längsschnitt durch ein Ventil mit erfindungsgemäßem Ventilantrieb in einer geschlossenen, ersten Ventilstellung;
- Figur 2 eine Draufsicht des Ventils nach Figur 1;
- Figur 3 einen Längsschnitt durch das Ventil mit erfindungsgemäßem Ventilantrieb nach Figur 1 in einer geschlossenen Ventilstellung;
- Figur 4 einen Längsschnitt durch das Ventil mit erfindungsgemäßem Ventilantrieb nach Figur 1 in einer teilgeöffneten, dritten Ventilstellung; und
- Figur 5 einen Längsschnitt durch das Ventil mit erfindungsgemäßem Ventilantrieb in einer offenen, zweiten Ventilstellung.

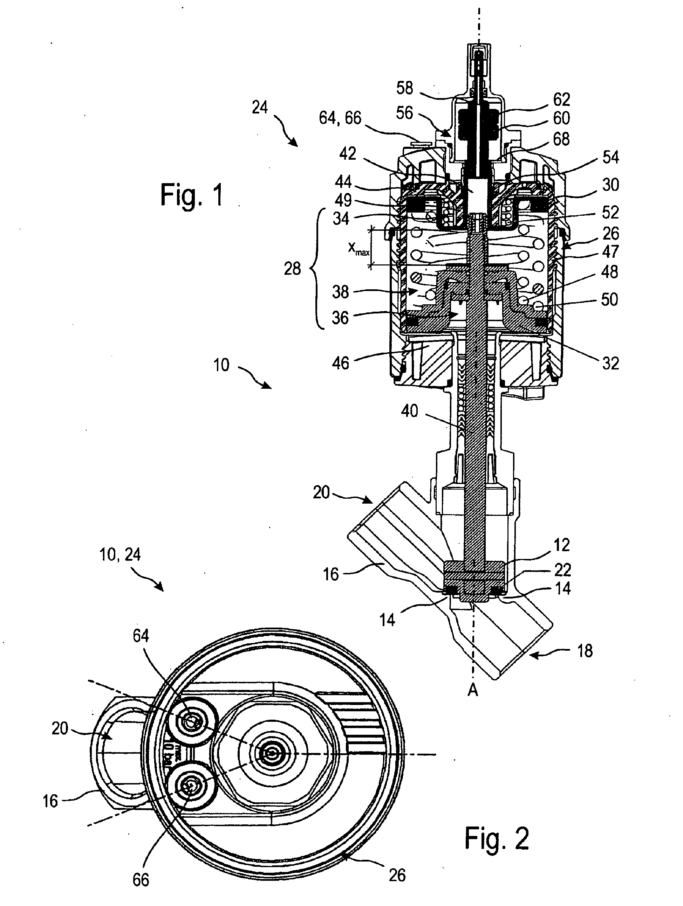

Die Figur 1 zeigt ein sogenanntes 3-Stellungsventil 10, welches sich in drei vordefinierte Ventilstellungen schalten lässt. Im dargestellten Ausführungsbeispiel ist das Ventil 10 ein 3-Stellungsschrägsitzventil, bei dem ein entlang einer Achse A verschiebbarer Ventilkörper 12 mit einem Ventilsitz 14 zusammenwirkt, um einen Durchflussquerschnitt des Ventils 10 festzulegen. Der Ventilsitz 14 ist in einem Ventilgehäuse 16 ausgebildet, welches einen Einlass 18 und einen Auslass 20 für das zu steuernde Fluid aufweist. Abhängig von den jeweiligen Anforderungen an das 3-Stellungsventil 10 sind selbstverständlich auch Ausführungsvarianten denkbar, bei denen der Einlass 18 und der Auslass 20 im Ventilgehäuse 16 vertauscht sind.

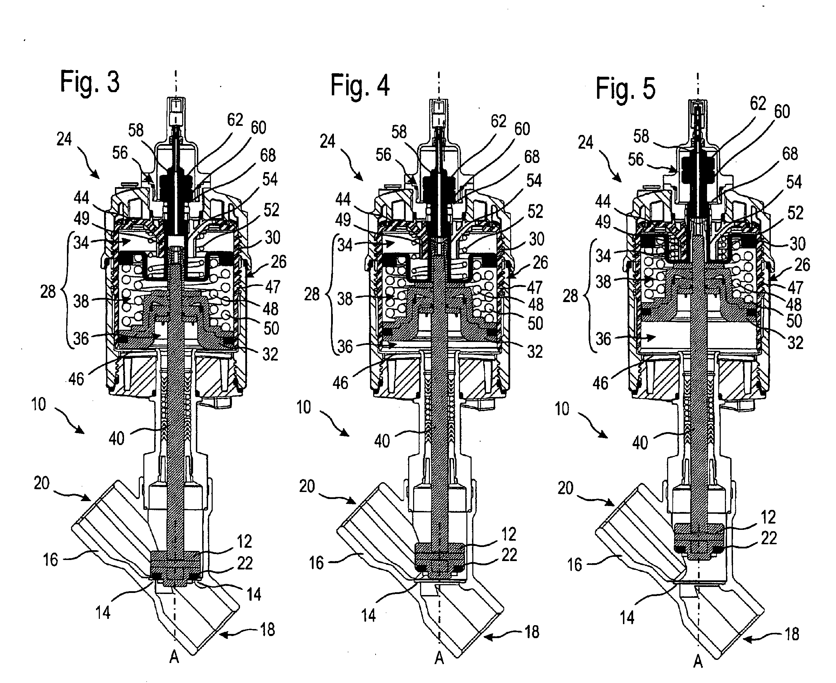

Das Ventil 10 befindet sich gemäß Figur 1 in einer ersten Ventilstellung. In dieser ersten Ventilstellung liegt ein Dichtungselement 22 des Ventilkörpers 12 am Ventilsitz 14 an, sodass eine Fluidverbindung zwischen dem Eingang 18 und dem Ausgang 20 geschlossen ist. Neben dieser geschlossenen, ersten Ventilstellung kann das 3-Stellungsventil 10 noch eine offene, zweite Ventilstellung (vgl. Figur 5) einnehmen, in der ein maximaler Durchflussquerschnitt zwischen dem Eingang 18 und dem Ausgang 20 des Ventilgehäuses 16 freigegeben ist, und eine teilgeöffnete, dritte Ventilstellung (vgl. Figur 4), in der ein reduzierter Durchflussquerschnitt zwischen dem Eingang 18 und dem Ausgang 20 des Ventilgehäuses 16 freigegeben ist.

Damit das Ventil 10 in die drei genannten, vordefinierten Ventilstellungen geschaltet werden kann, ist ein Ventilantrieb 24 vorgesehen, mit einem Gehäuse 26, das einen zylindrischen Arbeitsraum 28 aufweist, einem Justierkolben 30, der im Gehäuse 26 verschieblich geführt ist, und einem Durchflusssteuerkolben 32, der zwischen der geschlossenen, ersten Ventilstellung und der offenen, zweiten Ventilstellung verschieblich im Gehäuse 26 geführt ist. Die beiden Kolben 30, 32 unterteilen den Arbeitsraum 28 in eine an den Justierkolben 30 angrenzende erste Druckkammer 34, eine an den Durchflusssteuerkolben 32 angrenzende zweite Druckkammer 36 sowie eine sich vom Justierkolben 30 bis zum Durchflusssteuerkolben 32 durchgehend erstreckende Zwischenkammer 38, wobei der Durchflusssteuerkolben 32 in die durch einen Anschlag definierte, teilgeöffnete, dritte Ventilstellung (Figur 4) beaufschlagbar ist.

Der Durchflusssteuerkolben 32 ist dabei fest mit einer Kolbenstange 40 und die Kolbenstange 40 wiederum fest mit dem gegen den Ventilsitz 14 bewegbaren Ventilkörper 12 verbunden.

Der Justierkolben 30 nimmt ein axiales Ende der Kolbenstange 40 auf und ist relativ zur Kolbenstange 40 in axialer Richtung verschiebbar. Genauer gesagt weist der Justierkolben 30 eine Aussparung 42 auf, in der die Kolbenstange 40 in axialer Richtung teleskopartig geführt ist. Durch diese Führung stabilisieren sich die Kolben 30, 32 gegenseitig, wodurch ein Verkanten der Kolben 30, 32 im zylindrischen Arbeitsraum 28 weitgehend ausgeschlossen ist.

Im Ausführungsbeispiel gemäß den Figuren 1 bis 5 ist das Gehäuse 26 mehrteilig ausgebildet. Die konkrete Ausgestaltung des Gehäuses 26 ist jedoch für die Erfindung unerheblich, weshalb im Rahmen dieser Anmeldung unter dem Begriff "Gehäuse" alle Bauteile zusammengefasst werden, die zur Ausbildung des Arbeitsraums 28 beitragen, in dem die Kolben 30, 32 in axialer Richtung dichtend gleiten.

Die Kolben 30, 32 sind im zylindrischen Arbeitsraum 28 des Gehäuses 26 aufgenommen und längs der Zylinderachse A geführt, wobei der Arbeitsraum 28 axial durch Stirnwände 44, 46 begrenzt ist. Die Stirnwand 44 ist als Boden eines topfförmigen Einsatzteils 47 des Gehäuses 26 ausgebildet, wobei das Einsatzteil 47 als Gehäuseauskleidung und als Führung für die Kolben 30, 32 dient. In der Stirnwand 44 ist mittig ein zylindrischer Fortsatz 49 angeformt, der sich axial in den Arbeitsraum 28 erstreckt und einen (oberen) Endanschlag für den Justierkolben 30 bildet. Vorzugsweise liegt der Justierkolben 30 in seiner (oberen) Endanschlagstellung nur am Fortsatz 49 an und ist im übrigen von der Stirnwand 44 beabstandet. Der Ventilsitz 14 bildet einen (unteren) Endanschlag für den Durchflusssteuerkolben 32. Vorzugsweise liegt in der (unteren) Endanschlagstellung des Durchflusssteuerkolbens 32 lediglich der fest mit dem Durchflusssteuerkolben 32 verbundene Ventilkörper 12 am Ventilsitz 14 an, wohingegen der Durchflusssteuerkolben 32 selbst von der Stirnwand 46 beabstandet ist. Dadurch wird die Dichtigkeit in der geschlossenen Ventilstellung zuverlässig gewährleistet.

Die Positionen der beiden Kolben 30, 32 sind in der geschlossenen, ersten Ventilstellung gemäß Figur 1 durch mechanische Anschläge definiert, wobei der Fortsatz 49 des Gehäuses 26 den Anschlag für den Justierkolben 30 und der Ventilsitz 14 den Anschlag für den Durchflusssteuerkolben 32 bildet. Da sich der Justierkolben 30 am oberen Endanschlag und der Durchflusssteuerkolben 32 am unteren Endanschlag befinden, weisen die Kolben 30, 32 in der ersten Ventilstellung einen maximalen axialen Abstand xₘₐₓ auf. Dieser Abstand xₘₐₓ zwischen dem Justierkolben 30 und dem Durchflusssteuerkolben 32 entspricht dabei dem Ventilhub des 3-Stellungsventils 10 (vgl. Figuren 1 und 5).

In der Ausführungsform nach Figur 1 sind sowohl in der Zwischenkammer 38 als auch in einer der Druckkammern 34, 36 Federelemente 48, 50, 52 zur Beaufschlagung wenigstens eines Kolbens 30, 32 untergebracht. Insbesondere sind zwei Federelemente 48, 50 vorgesehen, welche den Durchflusssteuerkolben 32 in die geschlossene, erste Ventilposition drängen. Diese beiden Federelemente 48, 50 greifen sowohl am Justierkolben 30 als auch am Durchflusssteuerkolben 32 an und beaufschlagen die beiden Kolben 30, 32 voneinander weg. Gemäß Figur 1 sind die in der Zwischenkammer 38 untergebrachten Federelemente 48, 50 zwei parallel geschaltete Schraubendruckfedern, welche die Kolben 30, 32 gegen den Fortsatz 49 bzw. den Ventilsitz 14 drücken und das Ventil 10 somit in seine in Figur 1 dargestellte, erste Ventilstellung bewegen. Dies bietet den Vorteil, dass das 3-Stellungsventil 10 ohne Druckbeaufschlagung der Druckkammern 34, 36 eine geschlossene Ventilstellung einnimmt. Da das Ventil 10 in seiner deaktivierten Ruhestellung also nur durch Federkraft geschlossen ist, handelt es sich um ein sogenanntes NC-Ventil (normally-closed).

Einem Fachmann ist selbstverständlich klar, dass sich der Erfindungsgedanke durch einfache technische Anpassungen auch auf NO-Ventile (normally-open) übertragen lässt, d.h. Ventile, die in ihrer deaktivierten Ruhestellung geöffnet sind. Des Weiteren sind Ventilvarianten denkbar, bei denen die deaktivierte Ruhestellung der teilgeöffneten, dritten Ventilstellung entspricht.

Das Federelement 52 in der ersten Druckkammer 34 ist genau wie die Federelemente 48, 50 in der Zwischenkammer 38 auch als Schraubendruckfeder ausgebildet. Auf die Funktion dieses Federelements 52 wird in der Beschreibung zu Figur 4 noch genauer eingegangen.

Der Justierkolben 30 weist gemäß Figur 1 einen Fortsatz 54 auf, der aus dem zylindrischen Arbeitsraum 28 herausragt.

Ferner weist der Justierkolben 30 eine Justiervorrichtung 56 zum Einstellen eines Durchflussquerschnitts in der dritten Ventilstellung auf (vgl. auch Figuren 2 und 3). Die Justiervorrichtung 56 umfasst dabei eine fest mit dem Fortsatz 54 verbundene Gewindestange 58 sowie eine unterschiedlich weit auf die Gewindestange 58 aufdrehbare Mutter 60. Um ein unbeabsichtigtes Verstellen der Mutter 60 zu verhindern, ist im dargestellten Ausführungsbeispiel zusätzlich eine Kontermutter 62 vorgesehen.

Die Figur 2 zeigt eine Draufsicht des 3-Stellungsventils 10, in der zwei Druckanschlüsse 64, 66 gut zu erkennen sind, über welche die Druckkammern 34, 36 mit einem Druckmedium befüllt werden können. Das Ventil 10 ist vorzugsweise pneumatisch betätigt, sodass das Druckmedium zur Befüllung der Druckkammern 34, 36 gasförmig ist.

Sowohl der Druckanschluss 64 für die erste Druckkammer 34 als auch der Druckanschluss 66 für die zweite Druckkammer 36 liegen gemäß Figur 2 nicht in der zylindrischen Seitenwand, sondern benachbart und gut zugänglich auf einer axialen Stirnseite des Gehäuses 26 und sind über (nicht dargestellte) Kanäle im Gehäuse 26 mit ihrer jeweils zugeordneten Druckkammer 34, 36 verbunden. Durch diese Konstruktion der Druckanschlüsse 64, 66 lässt sich unabhängig von der genauen Größe und Bauart des Ventils 10 ein standardisierter und gut zugänglicher Anschlussbereich für die Zuführung des Druckmediums schaffen.

Die Figur 3 zeigt einen Zwischenschritt bei der Schaltung des 3-Stellungsventils 10 von der geschlossenen, ersten Ventilstellung gemäß Figur 1 in die teilgeöffnete, dritte Ventilstellung gemäß Figur 4. Analog zu Figur 1 befindet sich der Durchflusssteuerkolben 32 nach wie vor in seiner (unteren) Endanschlagstellung, in welcher der Ventilkörper 12 am Ventilsitz 14 anliegt, sodass der Durchflussquerschnitt zwischen dem Eingang 18 und dem Ausgang 20 des Ventilgehäuses 16 weiterhin geschlossen ist. Im Unterschied zu Figur 1 ist die erste Druckkammer 34 in Figur 3 jedoch mit einem Druckmedium, vorzugsweise Luft befüllt, wodurch der Justierkolben 30 in Richtung zum Durchflusssteuerkolben 32 beaufschlagt ist. Übersteigt dabei die Summe aus der resultierenden Kraft des Druckmediums und der Federkraft des Federelements 52 die Summe der entgegenwirkenden Federkräfte der Federelemente 48, 50, so verschiebt sich der Justierkolben 30 axial in Richtung zum Durchflusssteuerkolben 32. Der Justierkolben 30 bewegt sich dabei so weit in Richtung zum Durchflusssteuerkolben 32, bis der Justierkolben 30 an einem Justierkolbenanschlag 68 anliegt (vgl. Figur 3). Der Justierkolbenanschlag 68 ist außerhalb des Arbeitsraums 28 im Gehäuse 26 des Ventilantriebs 24 ausgebildet. In der Anschlagstellung liegt dabei die Mutter 60 des Justierkolbens 30 am Justierkolbenanschlag 68 des Gehäuses 26 an. Der Justierkolben 30 behält diese Anschlagstellung auch in der teilgeöffneten, dritten Ventilstellung gemäß Figur 4 bei.

Die axiale Position des Justierkolbens 30 in dieser Anschlagstellung lässt sich vorab einstellen, indem die Muttern 60, 62 mehr oder weniger weit auf die Gewindestange 58 aufgedreht werden.

Da der Justierkolben 30 in dieser Anschlagposition selbst einen Anschlag für den Durchflusssteuerkolben 32 in der dritten Ventilstellung gemäß Figur 4 bildet, lässt sich über die Justiervorrichtung 56 der Durchflussquerschnitt des Ventils 10 in der dritten Ventilstellung einstellen.

Die Figur 4 zeigt das Ventil 10 in seiner dritten Ventilstellung, bei der verglichen mit dem Zwischenschritt gemäß Figur 3 nun zusätzlich auch die zweite Druckkammer 36 mit Druckmedium befüllt ist, sodass der Durchflusssteuerkolben 32 in Richtung zum Justierkolben 30 beaufschlagt wird. Übersteigt dabei die resultierende Kraft des Druckmediums die entgegenwirkenden Federkräfte der Federelemente 48, 50, so bewegt sich der Durchflusssteuerkolben 32 in Richtung zum Justierkolben 30, bis er schließlich am Justierkolben 30 anliegt (vgl. Figur 4).

Vorzugsweise werden die Druckkammern 34, 36 bei der Befüllung mit einem Druckmedium mit identischem Druck beaufschlagt. Bevorzugt ist dabei die druckbeaufschlagte Fläche des Justierkolbens 30 größer als die druckbeaufschlagte Fläche des Durchflusssteuerkolbens 32, so dass auch die resultierende Kraft auf den Justierkolben 30 in Richtung zum Durchflusssteuerkolben 32 größer ist als die resultierende Kraft auf den Durchflusssteuerkolben 32 in Richtung zum Justierkolben 30. Folglich ist in der dritten Ventilstellung sichergestellt, dass der Justierkolben 30 in Anlage mit dem Justierkolbenanschlag 68 bleibt und selbst einen axial unverschieblichen, festen Anschlag für den Durchflusssteuerkolben 32 bildet. Diese Positionierung der Kolben 30, 32 in der dritten Ventilstellung mittels unterschiedlicher resultierender Kräfte wird zusätzlich durch das Federelement 52 unterstützt, welches den Justierkolben 30 in Richtung zum Durchflusssteuerkolben 32 beaufschlagt. Im übrigen hat das Federelement 52 die Funktion, einem Druckstoß des vom Eingang 18 zum Ausgang 20 durchströmenden Fluids auf den Ventilkörper 12 entgegenzuwirken und die Kolben 30, 32 gegebenenfalls wieder in die dritte Ventilstellung zurückzustellen.

Somit ist der Durchflusssteuerkolben 32 bei einer Befüllung beider Druckkammern 34, 36 mit Druckmedium in die dritte Ventilstellung gemäß Figur 4 beaufschlagt, in welcher der Justierkolben 30 sowohl am Justierkolbenanschlag 68 als auch am Durchflusssteuerkolben 32 anliegt.

Die Figur 5 zeigt das 3-Stellungsventil 10 in seiner offenen, zweiten Ventilstellung. Im Unterschied zur dritten Ventilstellung gemäß Figur 4 wird die erste Druckkammer 34 drucklos geschaltet, wodurch sich der Justierkolben 30 zusammen mit dem Durchflusssteuerkolben 32 entgegen der Federkraft des Federelements 52 axial bewegt (in Figur 5 nach oben). Aufgrund der weiterhin bestehenden Druckbeaufschlagung der zweiten Druckkammer 36 werden die Kolben 30, 32 soweit verschoben, bis der Justierkolben 30 am Fortsatz 49, d.h. am Endanschlag des Gehäuses 26 anliegt. Die Federelemente 48, 50 bleiben in dieser zweiten Ventilstellung komprimiert, so dass der Durchflusssteuerkolben 32 weiterhin am Justierkolben 30 anliegt.

Bei einer Druckentlastung der zweiten Druckkammer 36 werden die Kolben 30, 32 von den Federelementen 48, 50 auseinandergedrückt, bis das Ventil 10 seine geschlossene, erste Ventilstellung gemäß Figur 1 einnimmt.

Durch die vorgestellte Konstruktion lässt sich mit geringem Aufwand ein äußerst kompakter Ventilantrieb 24 zum Schalten von 3-Stellungsventilen 10 schaffen, wobei alle drei Ventilstellungen durch mechanische Anschläge exakt definiert sind.

## Patentansprüche

1. Ventilantrieb zum Schalten eines Ventils (10) in drei vordefinierte Ventilstellungen mit
einem Gehäuse (26), das einen zylindrischen Arbeitsraum (28) aufweist,
einem Justierkolben (30), der im Gehäuse (26) verschieblich geführt ist, und
einem Durchflusssteuerkolben (32), der zwischen einer geschlossenen, ersten Ventilstellung und einer offenen, zweiten Ventilstellung verschieblich im Gehäuse (26) geführt ist,
wobei die Kolben (30, 32) den Arbeitsraum (28) in eine an den Justierkolben (30) angrenzende erste Druckkammer (34), eine an den Durchflusssteuerkolben (32) angrenzende zweite Druckkammer (36) sowie eine sich vom Justierkolben (30) bis zum Durchflusssteuerkolben (32) durchgehend erstreckende Zwischenkammer (38) unterteilen,
wobei der Durchflusssteuerkolben (32) in eine durch einen Anschlag definierte, teilgeöffnete, dritte Ventilstellung beaufschlagbar ist, und
wobei der Durchflusssteuerkolben (32) fest mit einer Kolbenstange (40) und die Kolbenstange (40) wiederum fest mit einem gegen einen Ventilsitz (14) bewegbaren Ventilkörper (12) verbunden ist,
**dadurch gekennzeichnet, dass** der Justierkolben (30) die Kolbenstange (40) aufnimmt und entlang der Kolbenstange (40) verschiebbar ist.

2. Ventilantrieb nach Anspruch 1, **dadurch gekennzeichnet, dass** der Durchflusssteuerkolben (32) bei einer Befüllung wenigstens einer Druckkammer (34, 36), vorzugsweise beider Druckkammern (34, 36) mit einem Druckmedium in die dritte Ventilstellung beaufschlagt ist.

3. Ventilantrieb nach Anspruch 1 oder 2, **dadurch gekennzeichnet, dass** der Justierkolben (30) in der dritten Ventilstellung an einem Justierkolbenanschlag (68) anliegt.

4. Ventilantrieb nach einem der vorhergehenden Ansprüche, **dadurch gekennzeichnet, dass** der Justierkolben (30) in der dritten Ventilstellung am Durchflusssteuerkolben (32) anliegt und den Anschlag für den Durchflusssteuerkolben (32) bildet.

5. Ventilantrieb nach einem der vorhergehenden Ansprüche, **dadurch gekennzeichnet, dass** der Justierkolben (30) in der ersten Ventilstellung oder der zweiten Ventilstellung am Durchflusssteuerkolben (32) anliegt.

6. Ventilantrieb nach einem der vorhergehenden Ansprüche, **dadurch gekennzeichnet, dass** die Kolben (30, 32) im zylindrischen Arbeitsraum (28) des Gehäuses (26) aufgenommen und längs einer Zylinderachse (A) geführt sind, wobei der Arbeitsraum (28) axial durch Stirnwände (44, 46) begrenzt ist.

7. Ventilantrieb nach Anspruch 6, **dadurch gekennzeichnet, dass** eine der Stirnwände (44, 46) einen axialen Fortsatz (49) aufweist, welcher einen Endanschlag für den Justierkolben (30) bildet.

8. Ventilantrieb nach einem der vorhergehenden Ansprüche, **dadurch gekennzeichnet, dass** der Justierkolbenanschlag (68) außerhalb des Arbeitsraums (28) ausgebildet ist und/oder der Justierkolben (30) einen Fortsatz (54) aufweist, der aus dem zylindrischen Arbeitsraum (28) ragt.

9. Ventilantrieb nach einem der vorhergehenden Ansprüche, **dadurch gekennzeichnet, dass** der Justierkolben (30) eine Justiervorrichtung (56) zum Einstellen eines Durchflussquerschnitts in der dritten Ventilstellung aufweist.

10. Ventilantrieb nach einem der vorhergehenden Ansprüche, **dadurch gekennzeichnet, dass** wenigstens ein Federelement (48, 50) vorgesehen ist, welches den Durchflusssteuerkolben (32) in die geschlossene, erste Ventilposition beaufschlagt.

11. Ventilantrieb nach einem der vorhergehenden Ansprüche, **dadurch gekennzeichnet, dass** in der Zwischenkammer (38) und/oder einer der Druckkammern (34, 36) wenigstens ein Federelement (48, 50, 52) zur Beaufschlagung wenigstens eines Kolbens (30, 32) untergebracht ist.

12. Ventilantrieb nach Anspruch 10 oder 11, **dadurch gekennzeichnet, dass** das wenigstens eine Federelement (48, 50) sowohl am Justierkolben (30) als auch am Durchflusssteuerkolben (32) angreift und die beiden Kolben (30, 32) voneinander weg beaufschlagt.

13. Ventilantrieb nach einem der vorhergehenden Ansprüche, **dadurch gekennzeichnet, dass** der maximale Abstand (xₘₐₓ) zwischen dem Justierkolben (30) und dem Durchflusssteuerkolben (32) einem Ventilhub entspricht.

## Claims

1. A valve drive for switching a valve (10) into three predefined valve positions, comprising
a housing (26) which includes a cylindrical working space (28),
an adjusting piston (30) which is displaceably guided in the housing (26), and a flow control piston (32) which is displaceably guided in the housing (26) between a closed, first valve position and an open, second valve position,
the pistons (30, 32) subdividing the working space (28) into a first pressure chamber (34) adjacent to the adjusting piston (30), a second pressure chamber (36) adjacent to the flow control piston (32), and an intermediate chamber (38) continuously extending from the adjusting piston (30) as far as to the flow control piston (32),
the flow control piston (32) being adapted to be urged to a partially opened, third valve position defined by a stop, and
the flow control piston (32) being firmly connected with a piston rod (40) and the piston rod (40), in turn, being firmly connected with a valve body (12) that is adapted to be moved against a valve seat (14),
**characterized in that** the adjusting piston (30) receives the piston rod (40) and is displaceable along the piston rod (40).

2. The valve drive according to claim 1, **characterized in that** the flow control piston (32) is urged to the third valve position when at least one pressure chamber (34, 36), preferably both pressure chambers (34, 36), are filled with a pressure medium.

3. The valve drive according to claim 1 or 2, **characterized in that** in the third valve position, the adjusting piston (30) rests against an adjusting piston stop (68).

4. The valve drive according to any of the preceding claims, **characterized in that** in the third valve position, the adjusting piston (30) rests against the flow control piston (32) and forms the stop for the flow control piston (32).

5. The valve drive according to any of the preceding claims, **characterized in that** the adjusting piston (30) rests against the flow control piston (32) in the first valve position or the second valve position.

6. The valve drive according to any of the preceding claims, **characterized in that** the pistons (30, 32) are received in the cylindrical working space (28) of the housing (26) and are guided along a cylinder axis (A), the working space (28) being axially limited by end walls (44, 46).

7. The valve drive according to claim 6, **characterized in that** one of the end walls (44, 46) includes an axial extension (49) which forms a limit stop for the adjusting piston (30).

8. The valve drive according to any of the preceding claims, **characterized in that** the adjusting piston stop (68) is configured outside the working space (28) and/or the adjusting piston (30) includes an extension (54) which protrudes from the cylindrical working space (28).

9. The valve drive according to any of the preceding claims, **characterized in that** the adjusting piston (30) includes an adjusting device (56) for adjusting a flow cross-section in the third valve position.

10. The valve drive according to any of the preceding claims, **characterized in that** at least one spring member (48, 50) is provided which urges the flow control piston (32) to the closed, first valve position.

11. The valve drive according to any of the preceding claims, **characterized in that** at least one spring member (48, 50, 52) for acting upon at least one piston (30, 32) is accommodated in the intermediate chamber (38) and/or in one of the pressure chambers (34, 36).

12. The valve drive according to claim 10 or 11, **characterized in that** the at least one spring member (48, 50) engages both the adjusting piston (30) and the flow control piston (32) and urges the two pistons (30, 32) away from each other.

13. The valve drive according to any of the preceding claims, **characterized in that** the maximum distance (xₘₐₓ) between the adjusting piston (30) and the flow control piston (32) corresponds to one valve lift.

## Revendications

1. Entraînement de soupape pour la commutation d'une soupape (10) dans trois positions de soupape prédéfinies, comportant
un boîtier (26) qui présente un espace de travail cylindrique (28),
un piston d'ajustage (30) qui est guidé de manière déplaçable dans le boîtier (26), et
un piston de commande d'écoulement (32) qui est guidé de manière déplaçable dans le boîtier (26) entre une première position de soupape fermée et une deuxième position de soupape ouverte,
les pistons (30, 32) divisant l'espace de travail (28) en une première chambre de pression (34) adjacente au piston d'ajustage (30), une deuxième chambre de pression (36) adjacente au piston de commande d'écoulement (32) et une chambre intermédiaire (38) s'étendant en continu du piston d'ajustage (30) au piston de commande d'écoulement (32),
le piston de commande d'écoulement (32) étant apte à être sollicité dans une troisième position de soupape partiellement ouverte définie par une butée, et
le piston de commande d'écoulement (32) étant relié de manière solidaire à une tige de piston (40) et la tige de piston (40) pour sa part à un corps de soupape (12) apte à être déplacer contre un siège de soupape (14),
**caractérisé en ce que** le piston d'ajustage (30) reçoit la tige de piston (40) et est déplaçable le long de la tige de piston (40).

2. Entraînement de soupape selon la revendication 1, **caractérisé en ce que** le piston de commande d'écoulement (32) est sollicité dans la troisième position de soupape lors du remplissage d'au moins une chambre de pression (34, 36), de préférence des deux chambres de pression (34, 36) d'un agent de pression.

3. Entraînement de soupape selon la revendication 1 ou 2, **caractérisé en ce que** dans la troisième position de soupape, le piston d'ajustage (30) est en appui contre une butée de piston d'ajustage (68).

4. Entraînement de soupape selon l'une des revendications précédentes, **caractérisé en ce que** dans la troisième position de soupape, le piston d'ajustage (30) est en appui contre le piston de commande d'écoulement (32) et forme la butée pour le piston de commande d'écoulement (32).

5. Entraînement de soupape selon l'une des revendications précédentes, **caractérisé en ce que** dans la première position de soupape ou la deuxième position de soupape, le piston d'ajustage (30) est en appui contre le piston de commande d'écoulement (32).

6. Entraînement de soupape selon l'une des revendications précédentes, **caractérisé en ce que** les pistons (30, 32) sont reçus dans l'espace de travail cylindrique (28) du boîtier (26) et sont guidés le long d'un axe de cylindre (A), l'espace de travail (28) étant délimité axialement par des parois frontales (44, 46).

7. Entraînement de soupape selon la revendication 6, **caractérisé en ce que** l'une des parois frontales (44, 46) présente un prolongement axial (49) formant une butée d'extrémité pour le piston d'ajustage (30).

8. Entraînement de soupape selon l'une des revendications précédentes, **caractérisé en ce que** la butée de piston d'ajustage (68) est réalisée à l'extérieur de l'espace de travail (28) et/ou **en ce que** le piston d'ajustage (30) présente un prolongement (54) qui fait saillie hors de l'espace de travail cylindrique (28).

9. Entraînement de soupape selon l'une des revendications précédentes, **caractérisé en ce que** le piston d'ajustage (30) présente un dispositif d'ajustage (56) pour le réglage d'une section d'écoulement dans la troisième position de soupape.

10. Entraînement de soupape selon l'une des revendications précédentes, **caractérisé en ce qu'**il est prévu au moins un élément ressort (48, 50) qui sollicite le piston de commande d'écoulement (32) dans la première position de soupape fermée.

11. Entraînement de soupape selon l'une des revendications précédentes, **caractérisé en ce qu'**au moins un élément ressort (48, 50, 52) est logé dans la chambre intermédiaire (38) et/ou dans l'une des chambres de pression (34, 36) pour la sollicitation d'au moins un piston (30, 32).

12. Entraînement de soupape selon la revendication 10 ou 11, **caractérisé en ce que** ledit au moins un élément ressort (48, 50) s'engage tant sur le piston d'ajustage (30) que sur le piston de commande d'écoulement (32) et sollicite les deux pistons (30, 32) en éloignement l'un de l'autre.

13. Entraînement de soupape selon l'une des revendications précédentes, **caractérisé en ce que** la distance maximale (xₘₐₓ) entre le piston d'ajustage (30) et le piston de commande d'écoulement (32) correspond à une levée de soupape.
